# EUROPEAN PATENT APPLICATION

(11) **EP 1 826 660 A2**
(43) Date of publication of application: **29.08.2007**
(21) Application number: 07100710.8
(22) Date of filing: 18.01.2007
(51) Int. Cl.: G06F 3/048

(54) **Menu display method and computer readable recording medium storing program for performing the method**

(30) Priority: 28.02.2006 KR 20060019333
(71) Applicant: Samsung Electronics Co., Ltd., Suwon-si 442-742 Gyeonggi-Do (KR)
(72) Inventor: Bahn, Sahng-hee, Seoul (KR); Yu, Seung-dong, Gyeonggi-do (KR)
(74) Representative: Robinson, Ian Michael

(57) **Abstract**

A method of displaying a relationship between menus and applying a motion to the display, thereby facilitating the use of a menu and attracting the interest of a user. A computer readable recording medium storing a program can be used for performing the method. The method of displaying a menu includes selecting a menu item (212) from an upper menu (210), obtaining an amount of information related to a lower menu (220) or contents corresponding to the selected upper menu (210) item, displaying a connecting object (230) visually showing a relationship between the upper menu (210) and the lower menu (220) or the contents, and displaying the lower menu (220) or the contents and a motion moving at a speed determined according to the amount of information.

## Description

The present invention relates to a graphic menu, and more particularly, to a method of displaying a relationship between menus and applying a motion to the display, thereby facilitating the use of the menu and attracting the interest of a user. A computer readable recording medium storing a program can be used for performing the method.

A menu system that is usually used in computing systems such as consumer electronics (CE) devices has a hierarchical structure including a main menu, an upper menu, a lower menu, and content. Accordingly, a user sequentially selects menu items beginning with the main menu and continuing to the lower menu and finally selects a content item from a content list to view a desired content. Recently, instead of merely converting a screen during menu selection, a simple motion function using a stop motion animation has been developed and used.

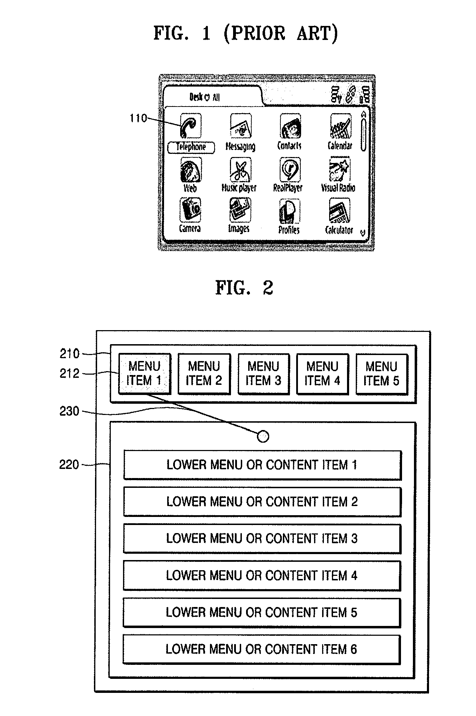

Figure 1 illustrates a conventional motion menu. If a menu item 110 is selected from a main menu, a motion corresponding to the menu item 110 is displayed. For example, a motion corresponding to a telephone icon is displayed and then a current screen is converted to a lower menu screen or a content screen related to the menu item 110.

In the conventional motion menu, the motion occurs only between screen transitions or functions only in a main menu, but does not operate on a lower menu. When an upper menu item is selected either: a motion of an icon indicating a corresponding upper menu or the upper menu item operates, a screen transition effect such as fade-in or fade-out is displayed, a motion displaying an effect of pushing a previous screen to the left or right is used, a motion for exchanging potions of a selected menu and a non-selected menu is used, or a speed of a motion decreases near a target point.

However, methods of displaying a conventional menu use general and standardized techniques, and thus, cannot stimulate the curiosity of a user. As a result, it is difficult to manufacture distinctive products that emotionally affect the user. Moreover, the conventional methods of displaying a menu cannot clearly show the relationship between an upper menu and a lower menu or content.

According to the present invention there is provided an apparatus and method as set forth in the appended claims. Preferred features of the invention will be apparent from the dependent claims, and the description which follows.

The present invention provides a method of displaying a menu in which different motions are applied to different menus to attract the interest of a user and the relationship between an upper menu and a lower menu is clearly provided to allow the user to use a menu system conveniently. A computer readable recording medium storing a program can be used for performing the method.

According to an aspect of the present invention, there is provided a method of displaying a menu including selecting a menu item from an upper menu, displaying a connecting object visually showing a relationship between the upper menu and a lower menu or contents corresponding to the selected upper menu item, and displaying the lower menu or the contents.

The method of displaying a menu may further include obtaining an amount of information related to the lower menu or the contents. The displaying of the lower menu or the contents may include displaying a motion moving at a speed determined according to the amount of information related to the lower menu or the contents.

The displaying of the connecting object may include displaying a line connecting the selected upper menu item to the lower menu or the contents.

The displaying of the lower menu or the contents may include displaying a traction motion of pulling the lower menu or the contents with the connecting object while changing a shape of the connecting object. Here, the method of displaying a menu may further include obtaining the amount of information related to the lower menu or the contents. The displaying of the traction motion may include determining a speed of the traction motion according to the amount of information, and displaying the traction motion of pulling the lower menu or the contents at the determined speed. The obtaining of the amount of information may include calculating at least one from among the amount of data necessary to display on a screen in order to display the lower menu or the contents, the amount of data included in the lower menu or the contents, and the number of items included in the lower menu or the contents. The displaying of the connecting object may include differing the display of the shape of the connecting object according to the amount of information.

Alternatively, the displaying of the lower menu or the contents may include displaying a motion of moving a point of view to a view of the lower menu or the contents. The method of displaying a menu may further include obtaining the amount of information related to the lower menu or the contents. The displaying of the motion of moving the point of view may include determining a speed of the motion according to the amount of information and displaying the motion of moving the point of view at the determined speed.

According to another aspect of the present invention, there is provided a computer readable recording medium for storing a program for performing a menu display method. The method of displaying a menu includes selecting a menu item from an upper menu, obtaining the amount of information related to a lower menu or contents corresponding to the selected upper menu item, displaying a connecting object visually showing a relationship between the upper menu and the lower menu or the contents, and displaying the lower menu or the contents and a motion moving at a speed determined according to the amount of information.

The above and other features and advantages of the present invention will become more apparent by describing in detail exemplary embodiments thereof with reference to the attached drawings in which:
Figure 1 illustrates a conventional motion menu;
Figure 2 illustrates the structure of a menu according to an exemplary embodiment of the present invention;
Figure 3 is a flowchart illustrating a method of displaying a menu according to an exemplary embodiment the present invention;
Figure 4 is a flowchart illustrating a method of displaying a menu according to an exemplary embodiment of the present invention;
Figures 5A through 5D illustrate examples of stages in the method of displaying a menu illustrated in Figure 4, according to an exemplary embodiment of the present invention;
Figure 6 is a flowchart illustrating a method of displaying a menu according to another exemplary embodiment of the present invention; and
Figures 7A through 7C illustrate examples of stages in the method of displaying a menu illustrated in Figure 6, according to an exemplary embodiment of the present invention.

Hereinafter, exemplary embodiments of the present invention will be described in detail with reference to the attached drawings. In the drawings, like reference numerals denote the like elements.

Figure 2 illustrates the structure of a menu according to an exemplary embodiment of the present invention. The menu has a hierarchical structure including an upper menu 210 and a lower menu 220. If a menu item 212 is selected from the upper menu 210, a window 220 showing sub-information corresponding to the menu item 212 is displayed. The sub-information may include a lower menu including lower menu items or a content list. Hereinafter, for the clarity of the description, the content list such as a file name list is referred to as a lower menu. The sub-information may include contents such as a text file or a photo. If the menu item 212 is selected from a lowest menu, contents corresponding to the menu item 212 will be displayed in the window 220.

In addition, a connecting object 230 is displayed. The connecting object 230 shows the relationship between the upper menu 210 and the window 220 showing sub-information including a lower menu or contents. The connecting object 230 may be a line, but the present invention is not restricted thereto. The connecting object 230 may be implemented using another figure or graphic data. In the current exemplary embodiment of the present invention, a line connecting the selected menu item 212 and the window 220 showing the lower menu corresponding to the selected menu item 212 is used as the connecting object 230. Accordingly, a user can easily recognize which one of menu items 212 in the upper menu 210 is related with the sub-information in the window 220 displayed on a screen.

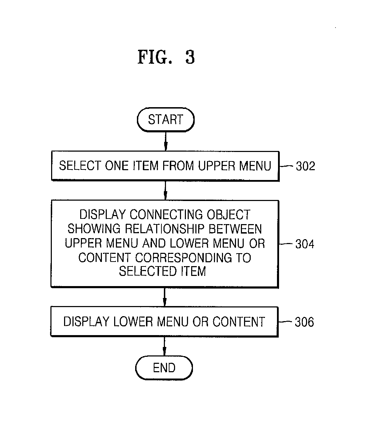

Figure 3 is a flowchart illustrating a method of displaying a menu according to an exemplary embodiment of the present invention. In operation 302, a user selects a menu item 212 from an upper menu 210 displayed on a screen. In operation 304, sub-information that is to be displayed is identified based on the selection of the menu item and a connecting object 230 visually showing the relationship between the upper menu 210 and the sub-information, i.e., a lower menu or contents corresponding to the selected menu item is displayed. The connecting object 230 may be a line connecting the selected menu item 212 and the lower menu or the contents.

In operation 306, the lower menu or the contents are displayed together with the connecting object 230. At this point, a motion may occur. The connecting object 230 and the lower menu may be displayed sequentially or simultaneously. When a motion menu is used, an order in which the connecting object 230 and the lower menu are displayed may differ according to a motion scenario. Alternatively, the amount of information related to the lower menu or the contents may be obtained before the lower menu or the contents are displayed. Then, a motion speed may be determined according to the amount of information. In other words, the lower menu or the contents may be displayed with a motion having different speeds according to the amount of information. In addition, the connecting object 230 may be displayed differently according to the amount of information. Accordingly, the user can intuitively perceive the amount of information from the display of the sub-information.

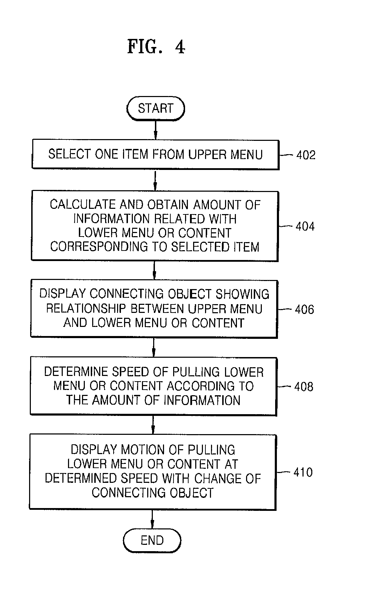

Figure 4 is a flowchart illustrating a method of displaying a menu according to an exemplary embodiment of the present invention. Referring to Figure 4, a traction motion is used when the connecting object 230 and sub-information are displayed. The traction motion is similar to pulling a sub-information window with a string. When a user selects a menu item 212 from an upper menu 210 in operation 402, the amount of information related with a lower menu or contents corresponding to the selected menu item 212 is calculated and obtained in operation 404. The amount of information may be the amount of data necessary to display on a screen the lower menu or the contents. In this case, the amount of data in the lower menu or the contents window to be displayed is calculated. Alternatively, the amount of information may be the amount of data included in the lower menu or the contents. For example, when the lower menu is a music menu and connected to a large amount of music files at a lower level in a hierarchical structure, a large amount of information will be calculated. When the lower menu is related with text and is connected to a small amount of text files, a small amount of information will be calculated. As another alternative, the amount of information may be the number of items included in the lower menu or the contents.

In operation 406, the connecting object 230 indicating the relationship between the upper menu 210 and the lower menu or the contents is displayed. The connecting object 230 may be a line connecting the selected menu item 212 to sub-information and may differ in color or thickness according to the amount of information obtained in operation 404. For example, when the amount of information related with the lower menu to be displayed is large, the connecting line is thick. Otherwise, the connecting line is thin so that the user can intuitively perceive the amount of information related with the lower menu just from the thickness of the connecting line.

In operation 408, the speed of a motion used when the sub-information is displayed is determined based on the amount of information obtained in operation 404. In operation 410, the sub-information is displayed with a traction motion pulling the lower menu or the contents. For the traction motion, the shape of the connecting object 230 is changed and the traction speed is determined according to the amount of information. In other words, when the amount of information is large, the traction motion is slow. When the amount of information is small, the traction motion is fast. Accordingly, the user can intuitively perceive the amount of information.

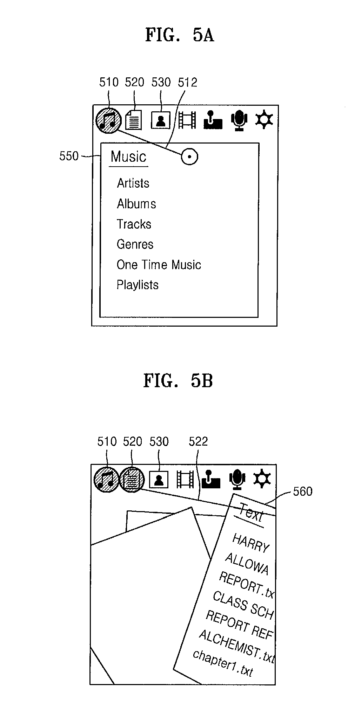

Figures 5A through 5D illustrate examples of stages in the method of displaying a menu illustrated in Figure 4, according to an exemplary embodiment of the present invention.

Referring to Figure 5A, when a first upper menu item 510 is selected, a lower menu window 550 corresponding to the first upper menu item 510 is displayed. Here, the connecting object 230, i.e., a line 512 showing the relationship between the first upper menu item 510 and the lower menu window 550 is displayed.

Referring to Figure 5B, when a second upper menu item 520 is selected in a state where the first upper menu item 510 has been selected, a traction motion of pulling out a content list window 560 corresponding to the second upper menu item 520 from the right of a screen in a rotational manner with a new connecting line 522 is displayed.

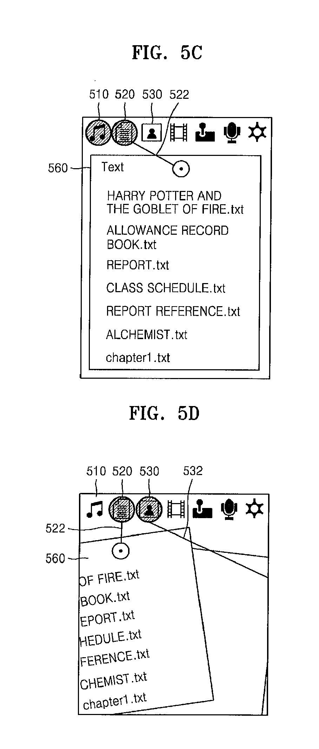

Figure 5C illustrates a state where the content list window 560 is displayed after the traction motion ends. As illustrated in Figures 5B and 5C, the new connecting line 522 changes in length and position during the traction motion.

Referring to Figure 5D, when a third upper menu item 530 is selected in the state illustrated in Figure 5C, a connecting line 532 starting from the third upper menu item 530 is displayed and the content list window 560 corresponding to the second upper menu item 520 released from selection disappears to the left in the rotational manner. When the content list window 560 disappears, a lower menu or content list window corresponding to the third upper menu item 530 will appear from the right in a traction motion in which the content list window is pulled by the connecting line 532.

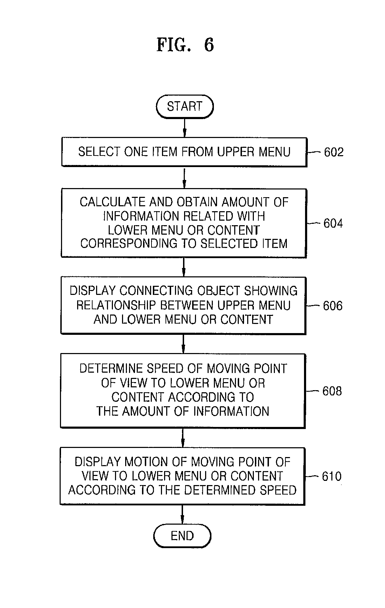

Figure 6 is a flowchart of a method of displaying a menu according to another exemplary embodiment of the present invention. Referring to Figure 6, a motion of moving a point of view is used when a connecting object and sub-information are displayed.

When a user selects a menu item from an upper menu in operation 602, the amount of information related with a lower menu or contents corresponding to the selected menu item is calculated and obtained in operation 604. The amount of information may be the amount of data necessary to display on a screen the lower menu or the contents. Alternatively, the amount of information may be the amount of data included in the lower menu or the contents. As another alternative, the amount of information may be the number of items included in the lower menu or the contents.

In operation 606, a connecting object indicating the relationship between the upper menu and the lower menu or the contents is displayed. The connecting object may be a line connecting the selected menu item to sub-information and may be different in color or thickness according to the amount of information obtained in operation 604.

In operation 608, the speed of a motion used when the sub-information is displayed is determined based on the amount of information obtained in operation 604. In operation 610, the sub-information is displayed with a motion of moving a point of view of a screen to the lower menu or the contents. For the motion of moving the point of view, the shape of the connecting object is changed and the speed of the motion is determined according to the amount of information. In other words, when the amount of information is large, the point of view is moved slowly. When the amount of information is small, the point of view is moved quickly. Accordingly, the user can intuitively perceive the amount of information.

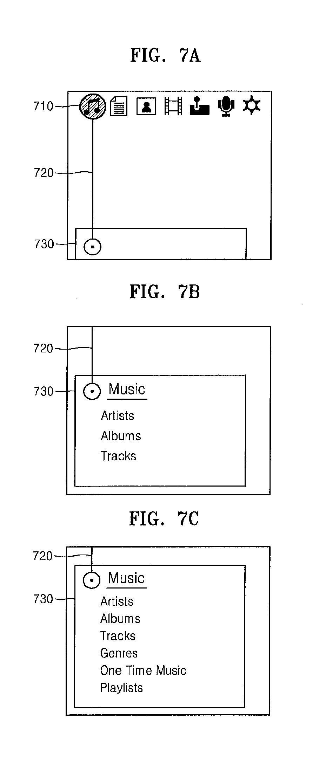

Figures 7A through 7C illustrate examples of stages in the method of displaying a menu illustrated in Figure 6, according to an embodiment of the present invention.

Referring to Figure 7A, when an upper menu item 710 is selected, a connecting object, i.e., a connecting line 720 showing the relationship between the upper menu item 710 and sub-information 730 is displayed and a motion of moving a point of view to the sub-information 730 starts. Figure 7B illustrates a screen displayed in the course of moving the point of view to the sub-information 730. Figure 7C illustrates a screen displayed after the point of view is completely moved to the sub-information 730.

The invention can also be embodied as computer readable codes on a computer readable recording medium.

As described above, according to the exemplary embodiment of the present invention, the relationship between an upper menu and a lower menu or sub-information is clearly expressed on a screen so that a user can easily recognize a current position in a menu system during navigation. In addition, an interesting motion is displayed when selected sub-information is displayed, thereby attracting the interest of a user. Here, the user is allowed to intuitively perceive the amount of sub-information from the speed of the motion. As a result, efficient user interface can be provided.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying a menu comprising;
selecting a menu item (212) from an upper menu (210);
displaying a connecting object (230) visually showing a relationship between the upper menu (210) and a lower menu (220) or contents corresponding to the selected item (212) of the upper menu (210); and
displaying the lower menu (220) or the contents.

2. The method of claim 1, further comprising obtaining an amount of information related to the lower menu (220) or the contents,
wherein the displaying of the lower menu (220) or the contents comprises displaying a motion moving at a speed determined according to the amount of information related with the lower menu (220) or the contents.

3. The method of claim 1 or 2, wherein the displaying of the connecting object (230) comprises displaying a line connecting the selected upper menu (210) item to the lower menu (220) or the contents.

4. The method of claim 1, 2 or 3, wherein the displaying of the lower menu (220) or the contents comprises displaying a traction motion of pulling the lower menu (220) or the contents with the connecting object (230) while changing a shape of the connecting object (230).

5. The method of claim 4, further comprising obtaining an amount of information related to the lower menu (220) or the contents,
wherein the displaying of the traction motion comprises:
determining a speed of the traction motion according to the amount of information; and
displaying the traction motion of pulling the lower menu (220) or the contents at the determined speed.

6. The method of claim 5, wherein the obtaining of the amount of information comprises calculating at least one from among the amount of data necessary to display on a screen in order to display the lower menu (220) or the contents, the amount of data included in the lower menu (220) or the contents, and the number of items included in the lower menu (220) or the contents.

7. The method of any preceding claim, further comprising obtaining an amount of information related to the lower menu (220) or the contents,
wherein the displaying of the connecting object (230) comprises differing the display of the shape of the connecting object (230) according to the amount of information.

8. The method of any preceding claim, wherein the displaying of the lower menu (220) or the contents comprises displaying a motion of moving a point of view to a view of the lower menu (220) or the contents.

9. The method of any preceding claim, further comprising obtaining an amount of information related to the lower menu (220) or the contents,
wherein the displaying of the lower menu (220) or the contents comprises:
determining a speed of a motion of moving a point of view to a view of the lower menu (220) or the contents according to the amount of information; and
displaying the motion of moving the point of view to the view of the lower menu (220) or the contents at the determined speed.

10. The method of claim 9, wherein the obtaining of the amount of information comprises calculating at least one from among the amount of data necessary to display on a screen the lower menu (220) or the contents, the amount of data included in the lower menu (220) or the contents, and the number of items included in the lower menu (220) or the contents.

11. The method of claim 9, wherein the displaying of the connecting object (230) comprises differing the display of a shape of the connecting object (230) according to the amount of information.

12. A computer readable recording medium having recorded thereon a program to perform a method of displaying a menu as set forth in any preceding claim.
